Europäisches Patentamt

European Patent Office

Office européen des brevets

(11) Veröffentlichungsnummer: **0 270 043**
**A2**

(12) # EUROPÄISCHE PATENTANMELDUNG

(21) Anmeldenummer: 87117631.9

(22) Anmeldetag: 28.11.87

(51) Int. Cl.4: **F27B 9/24** , F27B 9/30 , F27B 9/12

(30) Priorität: 28.11.86 DE 3640727

(43) Veröffentlichungstag der Anmeldung:
08.06.88 Patentblatt 88/23

(84) Benannte Vertragsstaaten:
AT BE CH DE ES FR GB GR IT LI LU NL SE

(71) Anmelder: A.P.T. Anlagen für Pyrotechnik GmbH
Königsallee 100
D-4000 Düsseldorf(DE)

(72) Erfinder: Verheyden G.M.C. jr.
P.O. Box 74
NL-6980 AB Doesburg(NL)

(74) Vertreter: Patentanwaltsbüro Cohausz & Florack
Postfach 14 01 47
D-4000 Düsseldorf 1(DE)

(54) Verfahren zur Wärmebehandlung von insbesondere im wesentlichen flachen Körpern aus keramischem Material und Durchlaufofen für die Durchführung des Verfahrens.

(57) Die Erfindung bezieht sich auf ein Verfahren und einen Durchlaufofen für die Wärmebehandlung von im wesentlichen flachen Körpern aus keramischem Material. Bei dem einen Rollgang 5 aufweisenden Durchlaufofen ist zwischen einer Aufheizzone 1 und einer Abkühlzone 2 eine gegenüber der Aufheizzone 1 und der Abkühlzone 2 durch Trennwände 6,7 abschottbare Brennzone 3 angeordnet, in der die zu brennenden Körper sehr schnell auf Brenntemperatur erwärmt werden, wobei sie zum Zwecke der Vermeidung von Verformungen hin-und herbewegt werden. Während des Brennens wird der Transport der Körper in der Abkühlzone 2 fortgesetzt, während der Transport in der Aufheizzone 1 unterbrochen wird, indem die Bewegung der Körper ganz gestoppt oder die Körper hin-und herbewegt werden. Während der Abschottung der Brennzone 3 werden die in der Kühlzone 2 erwärmten Gase über einen Bypass 12 in die Aufheizzone 11 geleitet, um an der Aufheizung der Körper teilzunehmen. Während der Entleerung der Brennzone und Bestückung der Brennzone 3 mit zu brennenden Körpern wird der Rollgang 5 in einem etwa der Länge der Brennzone 3 entsprechenden Abschnitt F1-F2, F5-F6 unmittelbar vor und hinter der Brennzone 3 sowie der Abschnitt F3-F4 der Brennzone selbst mit erhöhter Transportgeschwindigkeit angetrieben, um die Ausfallzeit für das Brennen möglichst kleinzuhalten.

## Verfahren zur Wärmebehandlung von insbesondere im wesentlichen flachen Körpen aus keramischem Material und Durchlaufofen für die Durchführung des Verfahrens

Die Erfindung bezieht sich auf ein Verfahren zur Wärmebehandlung von insbesondere im wesentlichen flachen Körpern aus insbesondere keramischem Material in einem mit Transportrollen bestückten Durchlaufofen mit einer Aufheizzone, einer Brennzone und einer Abkühlzone, bei dem die Behandlung der Körper in der Brennzone unter Abschottung gegenüber der vor-und nachgeordneten Zone und unter ständiger Vor-und Rückwärtsbewegung der in der Brennzone befindlichen Körper erfolgt.

Die Erfindung betrifft ferner einen Durchlaufofen für die Wärmebehandlung von insbesondere im wesentlichen flachen Körpern aus insbesondere keramischem Material, insbesondere zur Durchführung des vorgenannten Verfahrens, bestehend aus mehreren hintereinanderliegenden Temperaturzonen, und zwar einer Aufheizzone, einer vorne und hinten abschottbaren Brennzone und einer Abkühlzone, durch die die Körper mittels eines Rollganges transportiert werden, wobei der in der Brennzone liegende Abschnitt des Rollganges für eine Vor-und Rückwärtsbewegung eingerichtet ist.

Beim Brennen von keramischen Körpern ist eine kontrollierte Temperaturführung vor allem in der Aufheizzone qualitätsbestimmend. Die Wirtschaftlichkeit des Wärmebehandlungsprozesses wird von der Größe des Ofens, der Verweilzeit der Körper im Ofen und der benötigten Energie bestimmt. Es besteht deshalb die Forderung, Verfahren für die Wärmebehandlung von keramischen Körpern und dafür geeignete Öfen zu schaffen, die die Herstellung qualitativ hochwertiger flacher keramischer Körper auf möglichst wirtschaftliche Art und Weise gewährleisten.

Man hat versucht, diese Forderung mit einem in acht gegeneinander und nach außen abgeschotteten Kammern aufgeteilten Durchlaufofen zu erreichen. Die Kammern werden getrennt be-und entlüftet. Ein Gasströmung in oder gegen die Transportrichtung der Körper findet nicht statt. Die Wärmeübertragung geschieht ausschließlich durch Strahlung und Konvektion, wobei für die einzelne Kammer eine Wärmerückgewinnung vorgesehen sein kann. Während der Wärmebehandlung in der abgeschotteten Brennkammer können die Körper vor-und zurückbewegt, damit sie gleichmäßig und ohne Durchbiegen gebrannt werden können (Keramische Zeitschrift, 38.Jahrgang, Nr.10, 1986, Seite 626 und 627).

Ein solcher Durchlaufofen erlaubt zwar eine kontrollierte Temperaturführung und braucht weniger Platz als herkömmliche, nicht in Kammern unterteilte Durchlauföfen, doch entspricht sein Preis dem eines herkömmlichen Durchlaufofens. Auch bezüglich des Energieverbrauchs bringt dieser Ofen keine Vorteile.

Der Erfindung liegt die Aufgabe zugrunde, ein Verfahren zur Wärmebehandlung, insbesondere zum Brennen von flachen keramischen Körpern, und einen zur Durchführung des Verfahrens geeigneten Durchlaufofen zu schaffen, das bzw. der in seiner Wirtschaftlichkeit dem bekannten Verfahren und dem bekannten Durchlaufofen überlegen ist.

Diese Aufgabe wird verfahrensmäßig dadurch gelöst, daß während der Behandlung der Körper in der Brennzone der in Richtung der Brennzone kontinuierliche Transport der Körper in der Aufheizzone unterbrochen und der Transport der Körper in der Abkühlzone mindestens so lange fortgesetzt wird bis die Körper aus dem der Brennzone unmittelbar nachgeordneten Abschnitt der Kühlzone entfernt sind, und daß die in der Abkühlzone von-den Körpern rückgewonnene Wärmeenergie zur Erwärmung der Aufheizzone verwendet wird.

Bei dem Durchlaufofen der eingangs genannten Art wird diese Aufgabe dadurch gelöst, daß bei abgeschotteter Brennzone der Rollgang der Aufheizzone für eine Transportunterbrechung und der Rollgang der Abkühlzone für einen ununterbrochenen Transport eingerichtet sind und daß sowohl die Aufheizzone als auch die Kühlzone einen freien Durchgang haben und über eine Wärmerückgewinnung derart gekoppelt sind, daß auch bei abgeschotteter Brennzone die von den Körpern in der Kühlzone abgegebene Wärme der Aufheizzone zugeführt wird.

Bei der Erfindung werden die wärmezubehandelnden Körper nach einem vorgegebenen Programm, das durch die stehende Temperaturkurve in der Aufheizzone und die Transportgeschwindigkeit der Körper durch diese Zone bestimmt wird, getrocknet und auf eine erhöhte Temperatur, zum Beispiel 800° C gebracht. Eine Aufheizung bis auf diese Temperatur ist für das Material des Durchlaufofens unkritisch und erfordert kein teures, hochtemperaturfestes, keramisches Material, sondern kommt mit normalem rostfreien Stahl für Rollen und dergleichen aus. Nur in der Brennzone, in der eine Erwärmung bis auf Brenntemperatur, zum Beispiel 1100° C, erfolgt, wird teures hochtemperaturfestes keramisches Material für die Rollen und dergleichen benötigt. Da in dieser Zone aber eine schlagartige Erhöhung der Temperatur ohne Qualitätsnachteile für die Körper möglich ist, kann diese Zone kurz gehalten werden. Auch die Verweildauer kann aus diesem Grunde kurz bemessen werden, so daß die Durchsatzleistung insgesamt trotz des unterbrochenen Transportes nicht wesentlich vermindert wird. Da der Transport in der Kühlzone zumindest für eine gewisse Zeit nach dem Austragen des bzw. der gebrannten Körper aus der Brennzone fortgesetzt wird, ist genügend Raum geschaffen, um die aus der Brennzone herausgeförderten Körper aufzunehmen. Die besondere Art der Wärmerückgewinnung aus der Kühlzone führt zu einem geringeren Energieverbrauch als bei dem in einzelne Kammern unterteilten Durchlaufofen, bei dem wegen der kompletten Abschottung der einzelnen Kammern keine Kommunikation zwischen den einzelnen Zonen möglich ist.

Da bei der Erfindung im Gegensatz zu dem bekannten Ofen mit den vielen gegeneinander abgeschotteten Kammern nur die Brennzone als abgeschottete Zone ausgebildet ist, lassen sich herkömmliche Durchlauföfen ohne Abschottung einzelner Zonen leicht umrüsten. Außer dem Einbau der Brennzone brauchen dann lediglich besondere Steuerungen für die Antriebe der Rollen und der Bypass vorgesehen zu werden.

Nach einer Ausgestaltung der Erfindung werden bei in der Aufheizzone unterbrochenem Transport der Körper in Richtung der Brennzone diese Körper ständig vor-und rückwärtsbewegt. Dadurch wird der Gefahr entgegengewirkt, daß die verformbaren flachen Körper sich bei unterbrochenem Transport verformen. Um die Zeiten für die Entfernung der Körper aus der Brennzone und für das Einbringen in die Brennzone möglichst kurz zu halten, ist nach einer weiteren Ausgestaltung der Erfindung vorgesehen, daß die Körper auf einem der Brennzone unmittelbar vor-und unmittelbar nachgeordnetem Abschnitt sowie in der Brennzone mit gegenüber der Transportgeschwindigkeit auf den übrigen Abschnitten erhöhter Geschwindigkeit transportiert werden. Ein solcher Transport ist möglich, weil während der Behandlung der Körper in der Brennzone der Transport der Körper in der Abkühlzone fortgesetzt und damit genügend Platz in dem der Brennzone unmittelbar nachgeordneten Abschnitt geschaffen worden ist.

Die Rückgewinnung der Wärme aus der Abkühlzone und ihre Ausnutzung für die Erwärmung der Aufheizzone erfolgt vorzugsweise derart, daß zumindest bei abgeschotteter Brennzone die von den Körpern in der Abkühlzone erwärmten Gase über einen Bypass in die Aufheizzone geleitet werden. Dabei werden zweckmäßigerweise die Gase in der Abkühlzone und in der Aufheizzone im Gegenstrom zur Transportrichtung der Körper geleitet.

Im folgenden wird die Erfindung anhand einer Zeichnung näher erläutert, die in schematischer Darstellung einen zur Durchführung des Verfahrens geeigneten Durchlaufofen im Längsschnitt zeigt.

Der Durchlaufofen weist eine Aufheizzone 1, eine Abkühlzone 2 und eine dazwischen angeordnete Brennzone 3 auf. Diese drei Zonen 1 bis 3 sind in gerader Linie hintereinander angeordnet und weisen ein gemeinsames Gehäuse 4 aus wärmeisolierendem Material auf. Durch die drei Zonen erstreckt sich ein aus angetriebenen Rollen bestehender Rollgang 5. Einzelne Abschnitte des Rollganges 5 sind unabhängig voneinander und verschiedenartig in noch im einzelnen zu beschreibender Weise antreibbar.

Die Brennzone 3 ist gegenüber der vorgeordneten Aufheizzone 1 und der nachgeordneten Abkühlzone 2 abschottbar. Dazu dienen Trennwände 6,7, die mittels nicht dargestellter Antriebe heb-und senkbar sind.

Für die Beheizung der Aufheizzone 1 und der Brennzone 3 können herkömmliche Heizelemente, zum Beispiel oberhalb und unterhalb des Rollganges 5 angeordnete Heizplatten 8,9,10,11 vorgesehen sein. Die Beheizung der auf dem Rollgang 5 transportierten Platten erfolgt durch Strahlung und Konvektion. Um eine stehende Temperaturkurve in der Aufheizzone zu erzeugen, ist die Heizleistung der einzelnen Platten 8,9 individuell steuerbar.

Sowohl durch die Abkühlzone 2 als auch durch die Aufheizzone 1 findet eine Gasströmung G1,G2 statt. Das Gas der Gasströmung G1 dient dazu, die gebrannten, flachen Körper in der Abkühlzone 2 abzukühlen. Das auf diese Art und Weise erwärmte Gas gelangt bei offener Brennzone 3 durch diese in die Aufheizzone 1, während es bei geschlossener Brennzone 3 über einen Bypass 12, in dem ein Gebläse 13 eingebaut sein kann, in die Aufheizzone 1 gelangt. Das in jeder Zone entgegen der Transportrichtung strömende Gas bewirkt in der Abkühlzone 2 unter Aufnahme von Wärme eine Kühlung und in der Aufheizzone 1 unter Abgabe von Wärme eine Erwärmung.

Die Wärmebehandlung flacher keramischer Körper, wie Platten, erfolgt nach dem Anfahren auf folgende Art und Weise:

Nachdem bei abgesenkten Wänden 6,7 die zu brennenden flachen Körper in die Brennzone 3 transportiert worden sind, werden die Wände 6,7 angehoben und dadurch die Brennzone 3 abgeschottet. Die Temperatur in der Brennzone 3 wird möglichst schnell auf die Brenntemperatur, zum Beispiel 1100° C angehoben. Während des Brennens werden die in der Abkühlzone 2 befindlichen gebrannten Körper zumindest noch für eine gewisse Zeit weitertransportiert. Für diesen Weitertransport steht die Behandlungszeit in der Brennzone 3 zur Verfügung. Diese Zeit reicht in jedem Fall aus, um die Körper aus dem Abschnitt F5 - F6 herauszutransportieren, so daß genügend Freiraum für die nach dem Brennen mit erhöhter Transportgeschwindigkeit in den Abschnitt F5 -F6 transportierten Körper besteht. Während der Brennzeit ist der Transport der Körper in der Aufheizzone 1 in Richtung der Brennzone 3 unterbrochen, d.h. daß die Körper überhaupt nicht bewegt werden oder vorzugsweise mit im Vergleich zur Länge der Aufheizzone 1 sehr kleiner Amplitude vor-und zurückbewegt werden. Währen eine Vor- und Zurückbewegung in der Aufheizzone 1 vorteilhaft ist, ist ein Vor-und Zurückbewegung der Körper in der Brennzone 3 notwendig, damit die Körper bei einer schlagartigen Aufheizung von beispielsweise 800° C auf 1100° C gleichmäßig erwärmt werden und sich dabei nicht verformen. Auch in der Abkühlzone können die Körper, nachdem sie aus dem Abschnitt F5 - F6 heraustransportiert worden sind, angehalten oder vorzugsweise vor-und zurückbewegt werden.

Obgleich in dieser Betriebsphase der freie Durchgang durch den Ofen wegen der geschlossenen Wände 6,7 unterbrochen ist, bleibt die Wärmerückgewinnung über den wirksamen Bypass 12 erhalten.

Nach dem Ende der Wärmebehandlung der Körper in der Brennzone 3 werden die Wände 6,7 abgesenkt. Die gegebenenfalls bis zu diesem Zeitpunkt stattgefundene Hin-und Herbewegung in der Aufheizzone wird gestoppt. Die Rollen im Abschnitt F1 bis F6 werden erhöhter Geschwindigkeit in Richtung der Abkühlzone 2 angetrieben. Sobald die gebrannten Körper die Aufheizzone 3 verlassen und die noch nicht gebrannten Körper aus der Aufheizzone 1 in die Brennzone 3 gebracht worden sind, wird der Transport gestoppt und die Aufheizzone 1 durch Anheben der Wände 6,7 wieder abgeschottet. Bei normaler Transport-geschwindigkeit der Transportrollen im Abschnitt F6 bis F7 wird das gebrannte Gut abtransportiert. Bei normaler Transportgeschwindigkeit in der Aufheizzone werden die Körper bis unmittelbar vor die Trennwand 6 transportiert. Entweder wird dann der Transport in der Aufheizzone 1 ganz gestoppt oder es findet eine Hin-und Herbewegung statt.

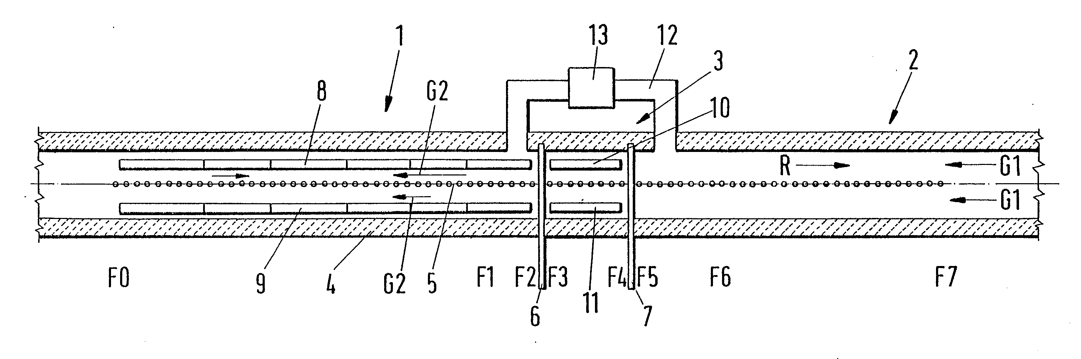

## Ansprüche

1. Verfahren zur Wärmbehandlung von insbesondere im wesentlichen flachen Körpern aus insbesondere keramischem Material in einem mit Transportrollen bestückten Durchlaufofen mit einer Aufheizzone, einer Brennzone und einer Abkühlzone, bei dem die Behandlung der Körper in der Brennzone unter Abschottung gegenüber der vor-und nachgeordneten Zone und unter ständiger Vor-und Rückwärtsbewegung der in der Brennzone befindlichen Körper erfolgt, **dadurch gekennzeichnet, daß** während der Behandlung der Körper in der Brennzone der in Richtung der Brennzone kontinuierliche Transport der Körper in der Aufheizzone unterbrochen und der Transport der Körper in der Abkühlzone mindestens so lange fortgesetzt wird bis die Körper aus dem der Brennzone unmittelbar nachgeordneten Abschnitt der Kühlzone entfernt sind, und daß die in der Kühlzone von den Körpern rückgewonnene Wärmeenergie zur Erwärmung der Aufheizzone verwendet wird.

2. Verfahren nach Anspruch 1, **dadurch gekennzeichnet, daß** zumindest bei abgeschotteter Brennzone die von den Körpern in der Abkühlzone erwärmten Gase über einen Bypass in die Aufheizzone geleitet werden.

3. Verfahren nach Anspruch 2, **dadurch gekennzeichnet, daß** die Gase in der Abkühlzone im Gegenstrom zur Transportrichtung der Körper geleitet werden.

4. Verfahren nach Anspruch 2 oder 3, **dadurch gekennzeichnet, daß** die Gase in der Aufheizzone im Gegenstrom zur Transportrichtung der Körper geleitet werden.

5. Verfahren nach einem der Ansprüche 1 bis 4, **dadurch gekennzeichnet daß** bei in der Aufheizzone unterbrochenem Transport der Körper in Richtung der Brennzone die Körper ständing vor-und rückwärtsbewegt werden.

6. Verfahren nach einem der Ansprüche 1 bis 5, **dadurch gekennzeichnet, daß** die Körper während ihres Transportes in die Brennzone und aus der Brennzone auf einem sowie der Brennzone unmittelbar vor-und nachgeordneten Abschnitt sowie in der Brennzone mit gegenüber der Transportgeschwindigkeit auf den übrigen Abschnitten erhöhter Geschwindigkeit transportiert werden.

7. Durchlaufofen für die Wärmebehandlung von insbesondere im wesentlichen flachen Körpern aus insbesondere keramischem Material, insbesonder zur Durchführung des Verfahrens nach Anspruch 1, bestehen aus mehreren hintereinanderliegenden Temperaturzonen, und zwar einer Aufheizzone, einer vorne und hinten abschottbaren Brennzone und einer Abkühlzone, durch die die Körper mittels eines Rollgangs transportiert werden, wobei der in der Brennzone liegende Abschnitt des Rollgangs für eine Vor-und Rückwärtsbewegung eingerichtet ist, **dadurch gekennzeichnet, daß** bei abgeschotteter Brennzone (3) der Rollgang (5) der Aufheizzone (1) für eine Transportunterbrechung und der Rollgang (5) der Abkühlzone (2) für einen ununterbrochenen Transport eingerichtet sind und daß sowohl die Aufheizzone (1) als auch die Kühlzone (2) einen freien Durchgang haben und über eine Wärmerückgewinnung derart gekoppelt sind, daß auch bei abgeschotteter Brennzone (3) die von den Körpern in der Kühlzone (2) abgegebene Wärme der Aufheizzone (1) zugeführt wird.

8. Durchlaufofen nach Anspruch 7, **dadurch gekennzeichnet**, daß in der Kühlzone (2) und gegebenenfalls in der Aufheizzone (1) Einrichtungen zur Erzeugung einer zur Transportrichtung (R) entgegengesetzten Strömung (G1,G2) vorgesehen sind und daß die Brennzone (3) durch einen Bypass (12) für diese Gase überbrückt ist.

9. Durchlaufofen nach Anspruch 7 oder 8, **dadurch gekennzeichnet**, daß jeweils ein Abschnitt (F1-F2, F5-F6) unmittelbar vor und unmittelbar nach der Brennzone (3) sowie der Abschnitt (F3-F4) des Rollgangs in der Brennzone (3) für eine gegenüber der Transportgeschwindigkeit in den übrigen Abschnitten (F0-F1, F6-F7) höhere Transportgeschwindigkeit eingerichtet ist.

10. Durchlaufofen nach einem der Ansprüche 7-9, **dadurch gekennzeichnet**, daß der Abschnitt (F0-F2) des Rollgangs (5) in der Aufheizzone (1) für eine Vor-und Rückwärtsbewegung eingerichtet ist.

0 270 043